# FASCICULE DE BREVET EUROPEEN

(11) **EP 1 850 602 B1**
(45) Date de publication et mention de la délivrance du brevet: **22.08.2012**
(21) Numéro de dépôt: 07290479.0
(22) Date de dépôt: 18.04.2007
(51) Int. Cl.: H04W 4/06

(54) **Procédé et système pour accélérer l'accès à un contenu à partir d'un terminal mobile**
Verfahren und System zur Beschleunigung des Zugriffs auf einen Inhalt von einem mobilen Endgerät
Method and system for speeding up access to contents from a mobile terminal

(30) Priorité: 27.04.2006 FR 0603773
(43) Date de publication de la demande: 31.10.2007
(73) Titulaire: Societé Française du Radiotéléphone, 75008 Paris (FR)
(72) Inventeur: Vincent, François, 92140 Clamart (FR)
(74) Mandataire: Debay, Yves

(56) Documents cités:
- WO-A2-2004/036923
- US-A1- 2003 003 909

## Description

### DOMAINE TECHNIQUE DE L'INVENTION

La présente invention se rapporte au domaine des télécommunications appliqué à l'accès à un contenu multimédia et/ou à un service privilégié à partir d'un équipement mobile.

L'invention concerne plus particulièrement un procédé pour accélérer l'accès à des données prédéterminées constituant soit un contenu multimédia, soit l'accès à un service privilégié, à partir d'un terminal mobile de communication sans fil s'appuyant sur l'infrastructure d'un réseau radiotéléphonique cellulaire ainsi qu'un système pour mettre en oeuvre ce procédé.

### ARRIERE-PLAN TECHNOLOGIQUE DE L'INVENTION

Les développements récents en matière de technologies des terminaux de communication sans fil dits terminaux mobiles, par exemple les téléphones portables, permettent à un utilisateur d'accéder à un contenu multimédia, par exemple, à des documents circulant par des réseaux sans fil, à partir de son téléphone portable. Ce dernier s'appuie sur une infrastructure connue du réseau radiotéléphonique cellulaire compatible avec une technologie telle que, par exemple, GSM (en anglais Global System for Mobile communications), GPRS (en anglais General Packet Radio Service), UMTS (en anglais Universal Mobile Telecommunications System), OFDM (en anglais Orthogonal Frequency Division Multiplexing), HSDPA (en anglais High Speed Downlink Package Access), FOMA (en anglais Freedom of Mobile Multimedia Access), CDMA (en anglais Code Division Multiplex Access) ou similaire.

Un exemple se trouve dans US 2003/003909.

Pour accéder aux documents circulant par des réseaux sans fil les terminaux de communication sans fil sont équipés de modules et/ou d'applications spécifiques, par exemple, de modules et/ou d'applications logicielles compatibles avec une technologie dite WAP (en anglais Wireless Application Protocol) portant sur un protocole universel. Ce dernier définit la façon par laquelle les terminaux mobiles peuvent accéder à un service privilégié et/ou à un contenu multimédia, par exemple, à un service Internet, à une page d'information dite page WAP, fournie par un fournisseur du service privilégié et/ou du contenu multimédia, par exemple, fourni par un fournisseur d'accès Internet. En outre, la technologie WAP définit aussi la manière dont les documents doivent être structurés grâce, par exemple, à un langage WML (en anglais Wireless Markup Language).

Une connexion à l'aide du protocole universel, dite connexion WAP, souffre cependant d'un handicap considérable dû au temps nécessaire pour établir cette connexion. En effet, pour qu'un utilisateur puisse accéder à partir de son équipement mobile à un service privilégié et/ou à un contenu multimédia, par exemple, pour lancer une navigation WAP, il faut entre plusieurs dizaines de secondes et une minute. Or, ce délai est jugé excessivement long par un nombre important des utilisateurs. Hormis la pénibilité d'attente que cela provoque, l'impossibilité d'accéder instantanément à un contenu multimédia, par exemple, aux premières pages du portail du fournisseur d'accès Internet de l'utilisateur, rend la navigation WAP inadaptée aux besoins spécifiques de l'utilisateur lorsque celui-ci est, entre autres, pressé.

De manière connue, une première approche pour améliorer les performances au lancement d'une navigation WAP consiste à limiter le volume de données à transmettre par le fournisseur du contenu au terminal mobile de l'utilisateur. Cela provoque inévitablement un appauvrissement notoire du contenu fourni à l'utilisateur, ce qui est insatisfaisant. A titre d'illustration, les premières pages du portail du fournisseur d'accès Internet de l'utilisateur apportent tellement peu d'informations pertinentes qu'elles ne peuvent pas a priori répondre aux besoins, même les plus courants, de l'utilisateur. Par exemple, les premières pages du portail du fournisseur d'accès Internet ne comportent pas des liens vers les pages météo. Il en résulte que cette première approche est contre-productive car elle va en contresens du progrès technique qui tend à offrir à un utilisateur du contenu multimédia et/ou de service privilégié, par exemple, des pages WAP de plus en plus volumineuses.

Une deuxième approche connue pour améliorer les performances au lancement d'une navigation WAP consiste à compresser le contenu, de manière à réduire le volume de données à transmettre par le fournisseur du contenu au terminal mobile de l'utilisateur. Cette solution ne donne cependant pas satisfaction pour plusieurs raisons. D'abord, elle nécessite des développements longs et coûteux des couches (applications) spécifiques qui doivent par la suite être installées à la fois dans des équipements réseau et dans les terminaux mobiles des utilisateurs. Puis, l'exécution des tâches successives de compression et de décompression requiert du temps en rendant aléatoires les gains espérés en performances au lancement de la navigation WAP. En outre, l'exécution de ces tâches gaspille les ressources énergétiques limitées des terminaux mobiles. Enfin, la compression de données a naturellement des limites. Ainsi, cette approche arrive rapidement à saturation suite au progrès technique qui tend à offrir à un utilisateur du contenu multimédia et/ou de service privilégié, par exemple, des pages WAP de plus en plus volumineuses.

Ces deux premières approches connues sont significativement limitées dans leur portée du fait qu'elles n'agissent que sur la phase de transmission du contenu alors même que la majeure partie du temps d'accès à ce contenu est consommé par l'établissement de la liaison sur les différentes couches de protocole, en particulier l'inscription au service de transmission de données, l'ouverture de la session ou contexte PDP (en anglais Packet Data Protocol context), et la négociation du canal de transport pour le contenu.

Une troisième solution connue pour améliorer les performances au lancement d'une navigation WAP consiste à résoudre ce problème de manière globale en modifiant les réseaux radiotéléphoniques. Il s'agit d'accroître une bande passante des réseaux radiotéléphoniques et, donc, de pouvoir augmenter le débit (vitesse) de transmission de données entre le fournisseur du contenu (ou des services) et le terminal mobile de l'utilisateur. Des progrès spectaculaires en la matière peuvent être illustrés par le développement récent du réseau UMTS qui propose une bande passante accrue comparée à celle du réseau GSM. A titre d'exemple, le débit d'un canal dit SMS-CB (en anglais Short Message Service Cell Broadcast) via le réseau UMTS vers un terminal mobile compatible UMTS peut atteindre jusqu'à 32 Kbits/seconde, tandis que le débit de ce même canal SMS-CB via le réseau GSM vers un terminal mobile compatible GSM est limité à seulement 1 Kbits/seconde.

Une quatrième solution connue consiste à préinscrire les abonnés du réseau cellulaire au service de transmission de données simultanément avec l'inscription aux services de base. Cette solution présente néanmoins l'inconvénient d'inscrire sur le réseau de données des clients qui n'utilisent pas ou très peu ce service et donc de monopoliser des ressources réseau coûteuses.

Cependant, même pour le réseau UMTS, le temps de connexion à un service WAP prend environ de 10 à 20 secondes, ce qui apparaît très long pour un utilisateur. En effet, l'extraordinaire augmentation du débit de la bande passante offert par le réseau UMTS a été suivie par un enrichissement considérable du contenu multimédia fourni sur un terminal mobile par un fournisseur de contenu en anéantissant les gains en performance au lancement d'une navigation WAP. Par exemple, les premières pages du portail du fournisseur d'accès Internet apportent maintenant une information beaucoup plus riche, avec par exemple des photos, aux utilisateurs mais restent peu consultées par ces derniers à cause du délai de connexion jugé excessif.

Un autre problème lié au volume du contenu réside dans l'exploitation parallèle de plusieurs réseaux, par exemple, UMTS et GSM, offrant des débits différents via leurs bandes passantes respectives. En effet, la couverture terrestre du réseau UMTS est à ce jour moindre que celle du réseau GSM. Par conséquent, en fonction de son emplacement géographique et de la disponibilité dans cette zone d'un ou plusieurs réseaux, un abonné, par exemple UMTS, à un service et/ou à un contenu privilégié doit pouvoir basculer (ou être basculé de manière transparente pour lui par le fournisseur du service et/ou du contenu) d'un réseau à l'autre (de UMTS à GSM et vice versa) tout en conservant la possibilité, par exemple, de lancer sa navigation WAP à partir de la première page d'accueil du même portail du même fournisseur d'accès Internet. En d'autres termes, il est inenvisageable pour un fournisseur d'accès Internet de réaliser des pages d'accueil WAP de volume différent en fonction du réseau utilisé par son abonné pour la navigation WAP, par exemple, GSM ou UMTS. Ainsi, le défi de réduire le temps d'attente perceptible par l'utilisateur pour établir une connexion WAP avec, par exemple, la première page du portail WAP du fournisseur d'accès Internet, quel que soit le réseau radiotéléphonique utilisé par l'abonné pour cette connexion, reste entier.

### DESCRIPTION GENERALE DE L'INVENTION

La présente invention a donc pour objet de supprimer un ou plusieurs des inconvénients de l'art antérieur en proposant un système pour accélérer l'accès à des données prédéterminées constituant soit un contenu multimédia, soit l'accès à un service privilégié, à partir d'un terminal mobile de communication sans fil s'appuyant sur l'infrastructure d'un réseau radiotéléphonique cellulaire.

A cet effet, l'invention concerne un système pour accélérer l'accès à des données prédéterminées constituant soit un contenu multimédia, soit l'accès à un service privilégié, comprenant au moins un terminal de communication radiotéléphonique cellulaire sans fil, dit terminal mobile, comportant au moins un objet essentiellement électronique à microcircuit et mémoire et au moins une interface interactive comprenant au moins un écran, au moins un clavier, au moins une touche du clavier et/ou au moins une zone tactile de l'écran du terminal, dite touche d'accès direct, permettant l'accès direct au contenu multimédia et/ou au service privilégié, le terminal mobile pouvant communiquer, dans un réseau de radiotéléphonie identifiable par des moyens du réseau, avec au moins un serveur interactif fournissant le contenu multimédia et/ou le service privilégié, dit serveur interactif, la transmission et la réception des données entre le terminal mobile et le serveur interactif s'opérant de manière bidirectionnelle du terminal mobile vers le serveur interactif et vice versa à l'aide d'au moins un noeud de traitement, **caractérisé en ce que** le réseau de radiotéléphonie comprend un centre de diffusion unidirectionnelle de données prédéterminées du serveur interactif vers le terminal mobile ou une pluralité de terminaux mobiles, via un canal unidirectionnel commun à tous les terminaux mobiles, **en ce que** les données prédéterminées transmises par le centre de diffusion unidirectionnelle comportent au moins une caractéristique d'identification identifiable par des moyens du terminal mobile, et **en ce que** le terminal mobile comporte :
- des moyens d'identification pour identifier les données prédéterminées transmises par le centre de diffusion unidirectionnelle via le canal unidirectionnel commun à tous les terminaux mobiles,
- des moyens de mémorisation de masse pour enregistrer les données prédéterminées identifiées par les moyens d'identification,
- des moyens d'autorisation pour lire des informations représentatives de la caractéristique d'identification des données prédéterminées enregistrées par les moyens de mémorisation de masse et pour autoriser ou non en fonction de ces informations l'accès de la touche d'accès directe à au moins une partie de ces données prédéterminées.

Selon une autre particularité, la programmation de diffusion des données prédéterminées est gérée selon au moins une règle de diffusion prédéfinie par le centre de diffusion unidirectionnelle ou par le serveur interactif.

Selon une autre particularité, les données prédéterminées sont mises à jour par le serveur interactif de manière périodique et le centre de diffusion unidirectionnelle diffuse ces données prédéterminées mises à jour à l'intervalle de temps prédéfini depuis la dernière mise à jour.

Selon une autre particularité, le centre de diffusion unidirectionnelle gère une répétition de diffusion des données prédéterminées identiques selon au moins une règle de répétition prédéfinie.

Selon une autre particularité, les données prédéterminées transmises par le centre de diffusion unidirectionnelle, via le canal unidirectionnel commun à tous les terminaux mobiles, sont identifiables par les moyens d'identification du terminal mobile à l'aide d'une ou plusieurs caractéristiques d'identification choisies parmi les paramètres suivants et/ou le résultat d'une fonction utilisant ces paramètres : (a) instant horodaté de la diffusion des données prédéterminées par le centre de diffusion unidirectionnelle ; (b) contenu des données prédéterminées transmises par le centre de diffusion unidirectionnelle ; (c) version du contenu des données prédéterminées transmises par le centre de diffusion unidirectionnelle ; (d) numéro de cellule du réseau de radiotéléphonie ; (e) identifiant du terminal mobile dans le réseau de radiotéléphonie.

Selon une autre particularité, au moins une partie des caractéristiques d'identification des données prédéterminées est émise, de manière séparée via le canal unidirectionnel commun à tous les terminaux mobiles, par le centre de diffusion unidirectionnelle préalablement à la diffusion, via ce même canal unidirectionnel, des données prédéterminées.

Selon une autre particularité, le réseau de radiotéléphonie comprend un serveur d'entrée installé en aval du serveur interactif et en amont du centre de diffusion unidirectionnelle par rapport au sens de transmission des données prédéterminées du serveur interactif vers le terminal mobile, et les données prédéterminées diffusées par le centre de diffusion unidirectionnelle sont formées par une pluralité de messages du volume prédéfini obtenus lors de la segmentation préalable des données prédéterminées du serveur interactif par le serveur d'entrée selon au moins une règle de segmentation prédéfinie.

Selon une autre particularité, les moyens d'identification du terminal mobile maintiennent une session de connexion unidirectionnelle du serveur d'entrée au terminal mobile, via le canal unidirectionnel commun à tous les terminaux mobiles, ouverte en permanence.

Selon une autre particularité, le terminal mobile comporte des moyens de gestion pour envoyer une requête au réseau de radiotéléphonie en vue d'établir une nouvelle connexion bidirectionnelle du terminal mobile au serveur interactif à l'aide du noeud de traitement, cette requête étant envoyée simultanément avec l'affichage de données prédéterminées enregistrées par les moyens de mémorisation de masse du terminal mobile sur l'écran du terminal mobile à l'aide de la touche d'accès direct du terminal mobile.

Selon une autre particularité, le réseau de radiotéléphonie et le terminal mobile sont compatibles avec la technologie GSM et/ou la technologie UMTS.

Selon une autre particularité, les données prédéterminées comprennent au moins une page d'accueil à un portail multimédia de type WAP géré par le serveur interactif.

Pour supprimer un ou plusieurs des inconvénients de l'art antérieur, l'invention a également pour objet de définir un procédé pour accélérer l'accès à des données prédéterminées constituant soit un contenu multimédia, soit l'accès à un service privilégié, à partir d'un terminal mobile de communication sans fil s'appuyant sur une infrastructure d'un réseau radiotéléphonique cellulaire.

A cet effet, l'invention concerne un procédé pour accélérer l'accès à des données prédéterminées constituant soit un contenu multimédia, soit l'accès à un service privilégié, mis en oeuvre par le système selon l'invention,
**caractérisé en ce qu**'il comporte
- une étape de communication du serveur interactif avec le réseau de radiotéléphonie par l'intermédiaire d'au moins un centre de diffusion unidirectionnelle pour diffuser, via un canal unidirectionnel commun à tous les terminaux mobiles, les données prédéterminées du serveur interactif vers le terminal mobile ou une pluralité de terminaux mobiles, ces données prédéterminées comportant au moins une caractéristique d'identification identifiable par des moyens du terminal mobile,
- une étape d'identification par des moyens d'identification du terminal mobile des données prédéterminées transmises par le centre de diffusion unidirectionnelle, via le canal unidirectionnel commun à tous les terminaux mobiles,
- une étape d'enregistrement par des moyens de mémorisation de masse du terminal mobile des données prédéterminées identifiées par les moyens d'identification du terminal mobile,
- une étape d'autorisation par des moyens d'autorisation du terminal mobile pour lire des informations représentatives de la caractéristique d'identification des données prédéterminées enregistrées par les moyens de mémorisation de masse du terminal mobile et pour, en fonction de ces informations, autoriser ou non par la touche d'accès direct l'utilisation d'au moins une partie de ces données prédéterminées.

Selon une autre particularité, le procédé comprend une étape de programmation de la diffusion des données prédéterminées gérée par le centre de diffusion unidirectionnelle ou par le serveur interactif selon au moins une règle de diffusion prédéfinie.

Selon une autre particularité, le procédé comprend
- une étape de mise à jour périodique des données prédéterminées par le serveur interactif et
- une étape de diffusion de ces données prédéterminées mises à jour, par le centre de diffusion unidirectionnelle à l'intervalle de temps prédéfini depuis la dernière diffusion.

Selon une autre particularité, le procédé comprend une étape de répétition de la diffusion par le centre de diffusion unidirectionnelle des données prédéterminées identiques selon au moins une règle de répétition prédéfinie.

Selon une autre particularité du procédé, l'étape de diffusion des données prédéterminées par le centre de diffusion unidirectionnelle est précédée par une étape de diffusion séparée préalable par le centre de diffusion unidirectionnelle, via le canal unidirectionnel commun à tous les terminaux mobiles, d'au moins une partie des caractéristiques d'identification des données prédéterminées.

Selon une autre particularité du procédé, l'étape de diffusion des données prédéterminées par le centre de diffusion unidirectionnelle, via le canal unidirectionnel commun à tous les terminaux mobiles, est précédée par une étape de segmentation préalable des données prédéterminées en une pluralité de messages de volume prédéfini par un serveur d'entrée installé en aval du serveur interactif et en amont du centre de diffusion unidirectionnelle par rapport au sens de transmission des données prédéterminées du serveur interactif vers le terminal mobile, cette segmentation étant opérée par le serveur d'entrée selon au moins une règle de segmentation prédéfinie.

Selon une autre particularité, le procédé comprend une étape d'ouverture permanente par les moyens d'identification du terminal mobile d'une connexion unidirectionnelle au serveur d'entrée du terminal mobile, via le canal unidirectionnel commun à tous les terminaux mobiles.

Selon une autre particularité, le procédé comprend une étape d'envoi d'une requête par des moyens de gestion du terminal mobile au réseau de radiotéléphonie en vue d'établir une nouvelle connexion bidirectionnelle du terminal mobile au serveur interactif à l'aide du noeud de traitement du réseau de radiotéléphonie, cette étape d'envoi de la requête s'opérant simultanément avec une étape d'affichage des données prédéterminées enregistrées par les moyens de mémorisation de masse du terminal mobile sur l'écran du terminal mobile, ces deux étapes étant déclenchées par l'actionnement de la touche d'accès direct du terminal mobile.

Selon une autre particularité du procédé, le réseau de radiotéléphonie à travers lequel les données prédéterminées du serveur interactif sont transmises et le terminal mobile destinataire de ces données, sont compatibles avec la technologie GSM et/ou la technologie UMTS.

Selon une autre particularité du procédé, les données prédéterminées comprennent au moins une page d'accueil à un portail multimédia de type WAP géré par le serveur interactif.

L'invention avec ses caractéristiques et avantages ressortira plus clairement à la lecture de la description faite en référence aux dessins annexés dans lesquels :
la figure 1 représente de manière schématique un mode de réalisation du système selon l'invention,
la figure 2 représente de manière schématique un autre mode de réalisation d'une partie du système selon l'invention.

### DESCRIPTION DES MODES DE REALISATION PREFERES DE L'INVENTION

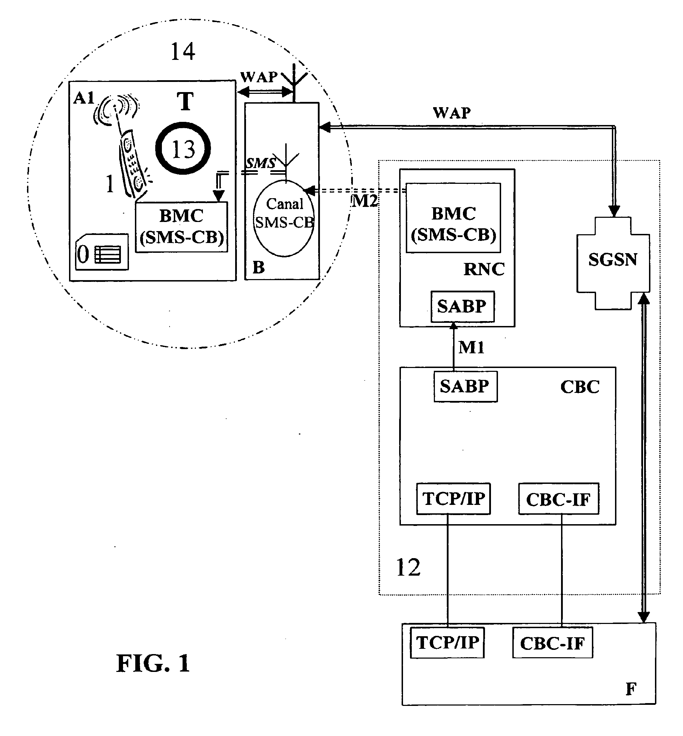

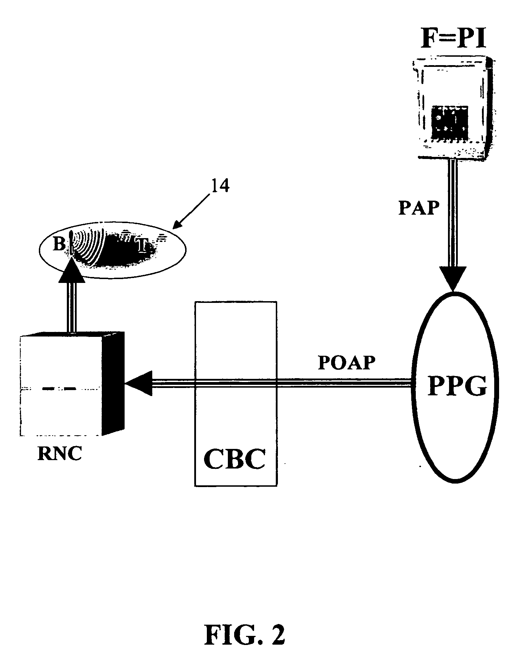

Tel qu'il est illustré de manière schématique et très simplifiée sur les figures 1 et 2, le système selon l'invention permet d'accélérer l'accès à des données prédéterminées constituant soit un contenu multimédia, soit l'accès à un service privilégié, et comprend au moins un terminal de communication radiotéléphonique cellulaire sans fil, dit terminal mobile (T), comportant au moins une interface interactive, réalisée par exemple sous forme d'un combiné téléphonique (1) muni d'un clavier et d'un écran et d'au moins un objet essentiellement électronique, par exemple, à plusieurs couches à microcircuit et mémoire, à savoir, une carte (0) dite SIM (en anglais Subscriber Identity Module). Cette dernière contient, de manière connue, l'identifiant de l'abonné utilisant le terminal mobile (T) dite IMSI (en anglais International Mobile Subscriber Identity) et les principales caractéristiques de l'abonnement. Le terminal mobile (T) sera identifié par l'identité du terminal mobile dite IMEI (en anglais International Mobile Equipement Identity).

Le système s'appuie sur une infrastructure connue de réseau radiotéléphonique cellulaire, par exemple, de type GSM ou UMTS et dont le coeur est représenté par la référence (12) sur la figure 1. En se référant à titre d'exemple au réseau de radiotéléphonie UMTS, le combiné téléphonique (1) est muni de manière connue d'une antenne (A1) de type UMTS permettant de transmettre les données vers les récepteurs ou de recevoir les données de l'émetteur de la station de base (noeud B (en anglais Node B)) constituant une cellule (14). Ces derniers sont pilotés de manière connue par un contrôleur de réseau radio « RNC » (en anglais Radio Network Controller). Le reste du réseau contrôlant le transfert des données et/ou l'identification du terminal mobile (T) n'est pas représenté sur la figure 1 mais est utilisé de façon connue.

De manière connue, le terminal mobile, identifiable par les moyens du réseau, peut communiquer dans un réseau de radiotéléphonie avec au moins un serveur interactif fournissant le contenu multimédia et/ou le service privilégié, dit serveur interactif (F). De façon connue, la transmission et la réception des données entre le terminal mobile (T) et le serveur interactif (F) s'opèrent de manière bidirectionnelle, c'est-à-dire, du terminal mobile vers le serveur interactif et vice versa par un canal de transmission de données dédié non recevable par d'autres terminaux en liaison radio avec la cellule (14).

En se référant au réseau de radiotéléphonie UMTS, la transmission et la réception bidirectionnelle des données entre le terminal mobile (T) et le serveur interactif (F) s'opèrent à l'aide, par exemple, d'un noeud de traitement de données, dit noeud de traitement. Il s'agit, par exemple, d'un noeud de traitement SGSN (en anglais Serving GPRS Support Node) qui permet, par exemple, d'assurer le contrôle de la connexion au réseau de données et de gérer la mobilité dans le réseau, tout en assurant le routage des flux de données entre le terminal mobile (T) et le serveur interactif (F). Ainsi, l'abonné disposant du terminal mobile (T) peut accéder au contenu multimédia et/ou au service privilégié fourni par le serveur interactif (F). Il s'agit, par exemple, d'accès à une page d'accueil d'un portail multimédia de type WAP gérée et/ou hébergée par le serveur interactif (F) appartenant au fournisseur d'accès Internet de l'abonné.

Pour faciliter cet accès de l'abonné au portail multimédia, le terminal mobile (T) et, notamment le combiné téléphonique (1), peuvent comporter au moins un moyen d'accès direct au contenu multimédia et/ou au service privilégié. Il s'agit, par exemple, d'une touche du clavier du terminal mobile (T), dite touche d'accès direct (13), et/ou d'une zone tactile de l'écran du terminal permettant l'accès direct au contenu multimédia et/ou au service privilégié, et/ou d'un accès via un menu déroulant. Ainsi, en appuyant sur cette touche d'accès direct (13) ou en effleurant la zone tactile de son terminal mobile (T), l'abonné fait démarrer une connexion bidirectionnelle sans fil, par exemple, via un canal bidirectionnel de transmission et de réception de données propre au terminal mobile (T) et au serveur interactif (F), dite connexion WAP, qui génère le transfert des données du contrôleur de réseau radio (RNC) au serveur interactif (F) à l'aide du noeud de traitement SGSN. Ce cheminement des données est représenté de manière schématique par une double ligne sur la figure 1.

La connexion WAP dans un réseau de radiotéléphonie à l'aide du noeud de traitement SGSN, actuellement s'opère en au moins quatre étapes connues, par exemple :
- une étape d'attachement du terminal mobile (T) à la station de base (B) constituant la cellule (14) du réseau de radiotéléphonie et au coeur du réseau ;
- une étape de négociation de la qualité de service et/ou de la transmission ;
- une étape d'établissement d'une liaison entre le coeur du réseau de radiotéléphonie et la partie radio du réseau de radiotéléphonie ;
- une étape d'acheminement des paquets de données sur toute la longueur du réseau entre le serveur interactif (F), par exemple WAP, et le terminal mobile (T).

Chacune de ces étapes nécessite un certain temps pour son exécution, la connexion WAP dans le réseau de radiotéléphonie à l'aide du noeud de traitement SGSN requiert un délai d'attente de quelques dizaines de secondes, par exemple, d'environ 10 s à 20 s pour le réseau UMTS.

Pour réduire ce temps, l'étape d'attachement du terminal mobile (T) à une cellule du réseau de radiotéléphonie et au coeur du réseau s'opère simultanément avec une étape d'attachement au service de transmission de données au noeud de traitement SGSN, par exemple, permettant une inscription des identifiants de l'abonné. Ceci produit un impact significatif sur le nombre total des inscrits auprès du noeud de traitement SGSN et le coût associé aux licences concédées pour le service de transmission de données que celui-ci soit utilisé ou pas. Ce mode de réalisation impose la mise en oeuvre d'un moyen de détachement (par exemple, au niveau du réseau de radiotéléphonie ou du terminal mobile), qui résilie l'inscription de l'abonné auprès du noeud de traitement SGSN après, par exemple, une période prédéterminée d'inactivité, lors par exemple, de l'absence prolongée (par exemple pendant 3 heures) d'échanges entre le terminal mobile (T) et le serveur interactif (F).

De toute façon, les trois dernières étapes nécessaires au chargement des données représentant les pages d'accès aux services WAP restent indispensables pour toutes les connexions au serveur interactif (F) à partir du terminal mobile (T).

En d'autres termes, une inscription initiale des identifiants de l'abonné auprès du noeud de traitement SGSN lors, par exemple, de l'inscription aux services de base (voix, SMS (en anglais en anglais Short Message Service), etc.) ne permet pas de réduire de manière certaine le délai d'attente pour l'abonné lors des connexions au WAP.

Il a été observé que la plupart des abonnés désirant accéder à un contenu multimédia et/ou à un contenu privilégié fourni par le serveur interactif (F) démarrent, après avoir lancé une connexion WAP à l'aide de la touche d'accès direct (13), par la première page d'accueil du portail WAP gérée et/ou hébergée par le fournisseur d'accès Internet de l'abonné. Cette première page est mise à jour par le fournisseur d'accès Internet plusieurs fois par jour mais reste inchangée sur des périodes prédéterminées, par exemple, d'environ 1 à 2 heures. La première page d'accueil du portail WAP dispose d'au moins une application de lien permettant d'accéder à un autre contenu multimédia, par exemple, à d'autres pages WAP, dites pages WAP secondaires. Il s'agit, par exemple, des pages WAP avec d'autres applications de lien permettant d'accéder à encore un autre contenu multimédia, par exemple, la météo du jour, le trafic, les principales nouvelles du jour, les résultats des événements sportifs etc. Le nombre de ces autres pages WAP (et, donc, des applications de lien sur la première page d'accueil du portail WAP) est généralement limité, par exemple, à une douzaine. Ces pages WAP secondaires peuvent ou non être gérées et/ou hébergées par le fournisseur d'accès Internet de l'abonné. Dans une variante de l'invention, ces pages d'accueil apportent au moins une partie du contenu multimédia et/ou du service privilégié recherché par l'abonné, par exemple les numéros pour appeler les services de premiers secours (pompier, police, SAMU, etc.). Dans une autre variante de l'invention, les deux niveaux de l'arborescence des pages WAP (la page d'accueil du portail WAP formant le premier niveau, les pages WAP secondaires formant le deuxième niveau) n'apportent pas stricto sensu le contenu multimédia mais permettent d'orienter l'abonné dans l'environnement des pages, en aiguillant l'abonné vers le contenu multimédia et/ou le service privilégié souhaité. Notons que pour pouvoir traverser ces deux niveaux de pages WAP, par exemple, les deux premières pages d'accueil du portail WAP, l'abonné doit compter entre 30 s et 60 s, compte tenu des temps de connexion, de transmission et de navigation (d'activation des applications de lien).

Pour réduire ce délai d'attente de l'abonné, le système selon l'invention propose avantageusement de précharger des données prédéterminées constituant, par exemple des premières pages d'accueil d'un portail WAP et provenant du serveur interactif à destination du terminal mobile dans la mémoire du terminal mobile (T), tout en permettant au système d'exploitation du terminal d'accéder à ces données prédéterminées à l'aide, par exemple, de la touche d'accès direct (13).

A cet effet, le réseau de radiotéléphonie comprend un centre de gestion de la diffusion unidirectionnelle de données prédéterminées du serveur interactif (F) vers le terminal mobile (T) ou une pluralité de terminaux mobiles, via un canal unidirectionnel commun à tous les terminaux mobiles. Ce centre de gestion de diffusion unidirectionnelle de données prédéterminées peut être, par exemple, un centre « CBC » de diffusion aux cellules (en anglais Cell Broadcast Center) coopérant avec les moyens du réseau de radiotéléphonie et dédié à gérer le transfert des données prédéterminées provenant du serveur interactif (F) à destination d'au moins une cellule (14) chargée de la diffusion au terminal mobile (T) ou à un ensemble de terminaux mobiles.

Par ailleurs, les données prédéterminées transmises par le centre CBC comportent au moins une caractéristique d'identification identifiable par des moyens du terminal mobile. Notons à ce titre que les données prédéterminées transmises par le centre CBC, via le canal unidirectionnel commun à tous les terminaux mobiles, sont identifiables par les moyens d'identification du terminal mobile à l'aide d'une ou plusieurs caractéristiques d'identification choisies parmi les paramètres suivants et/ou le résultat d'une fonction utilisant ces paramètres : (a) instant horodaté de la diffusion des données prédéterminées par le centre de diffusion unidirectionnelle ; (b) contenu des données prédéterminées transmises par le centre de diffusion unidirectionnelle ; (c) version du contenu des données prédéterminées transmises par le centre de diffusion unidirectionnelle ; (d) numéro de cellule du réseau de radiotéléphonie ; (e) identifiant du terminal mobile dans le réseau de radiotéléphonie.

En outre, le terminal mobile comporte avantageusement :
- des moyens d'identification pour identifier les données prédéterminées transmises par le centre de diffusion unidirectionnelle via le canal unidirectionnel commun à tous les terminaux mobiles. Cela permet au terminal mobile (T) de ne pas réécouter ou réenregistrer les messages avec l'état de la caractéristique d'identification (par exemple la version du contenu) identique à celui des messages déjà enregistrés, en économisant ainsi de l'énergie, de la mémoire etc. Un autre exemple est celui d'un terminal mobile (T) se déplaçant d'une cellule du réseau de radiotéléphonie à l'autre, qui ne cherchera pas à enregistrer un message dont l'identifiant est identique, à l'exception du numéro de cellule émettrice. Ainsi le système d'exploitation de chaque terminal prendra la décision après réception et analyse de ces identifiants d'écouter et enregistrer ou non ces données prédéterminées.
- des moyens de mémorisation de masse pour enregistrer les données prédéterminées identifiées par les moyens d'identification,
- des moyens d'autorisation pour lire des informations représentatives de la caractéristique d'identification des données prédéterminées enregistrées par les moyens de mémorisation de masse et pour autoriser ou non en fonction de ces informations l'accès de la touche d'accès direct à au moins une partie de ces données prédéterminées.

Dans un autre mode de réalisation du système selon l'invention, le terminal mobile (T) comporte des moyens de gestion pour envoyer une requête au réseau de radiotéléphonie en vue d'établir une nouvelle connexion bidirectionnelle du terminal mobile (T) au serveur interactif (F) à l'aide du noeud de traitement, cette requête étant envoyée simultanément à l'affichage des données prédéterminées sur l'écran du terminal mobile à l'aide de la touche d'accès directe (13) du terminal mobile (F).

A titre d'illustration, notons que, par exemple, pour 15 pages WAP de 20 Koctets (Ko), chacune constituant les deux niveaux de l'arborescence des pages d'accès WAP du serveur interactif (F) à mettre à jour toutes les heures, il faut disposer d'une ressource de 2400 Kbits/heure, soit 0,66 Kbits/seconde. Or, pour le réseau de radiotéléphonie UMTS, la station de base (noeud B (en anglais Node B)) dispose, par exemple, d'un canal SMS-CB (en anglais Short Message Service Cell Broadcast) qui permet un débit jusqu'à 30 Kbits/seconde. Ainsi, il existe suffisamment de marge de débit pour prévoir non seulement un envoi unitaire des 15 pages WAP toutes les heures mais même des stratégies de répétition assurant une réception garantie de ces pages par le terminal mobile (T). En effet, le caractère « peu fiable » du canal SMS-CB dû à l'absence d'accusé de réception du terminal mobile (T) impose une stratégie de répétition permettant de garantir une disponibilité des pages WAP adéquates et, en particulier, de la première page d'accueil au portail WAP. Précisons que le terme « peu fiable » utilisé pour décrire le caractère particulier du canal SMS-CB ne traduit aucunement un quelconque problème technique lié à la transmission de données, car sur le plan technique en tant que tel le canal SMS-CB est, bien entendu, parfaitement sûr. Le caractère « peu fiable » du canal SMS-CB doit être compris dans le sens que la transmission des données provenant du serveur interactif (F) à destination du terminal mobile (T) est unidirectionnelle. Compte tenu de cette absence de canal de retour, le terminal mobile (T) ne confirme donc pas la bonne réception des données envoyées par le serveur interactif (F) à ce dernier ou à un autre élément du réseau de radiotéléphonie. Or, lors des déplacements de l'abonné, son terminal mobile (T) peut se retrouver, par exemple, dans une zone où la réception du signal via le canal SMS-CB par le terminal mobile est incertaine. Puis l'abonné peut quitter cette zone de réception incertaine pour se retrouver de nouveau dans une zone de réception fiable et vice versa. Ainsi, en absence de stratégies de répétition d'envoi des données provenant du serveur interactif à destination du terminal mobile (T), leur réception garantie par le terminal mobile risque d'être compromise si leur envoi s'opère quand l'abonné se trouve momentanément dans la zone où la réception du signal via le canal SMS-CB par le terminal mobile est incertaine.

Notons que les spécifications du protocole de transfert des données sans fil répondant aux normes OMA (en anglais Open Mobile Alliance), par exemple, dit protocole WDP (en anglais Wireless Data Protocol), prévoient le transfert, par exemple, des pages WAP sur une large variété de canaux porteurs, dont le canal SMS-CB. Par conséquent, le choix du canal SMS-CB évoqué ci-dessus à titre d'illustration n'est aucunement limitatif.

Quant au réseau de radiotéléphonie GSM, la station de base (B) dispose du canal SMS-CB pour GSM qui permet un débit de l'ordre de 1 Kbits/seconde. Ce dernier n'est donc pas suffisant pour mettre à jour les deux niveaux de l'arborescence des pages WAP constituées de 15 pages de 20 Ko chacune dans le présent exemple, et assurer leur réception garantie à l'aide des stratégies de répétition d'envoi des données. Cependant, un débit de 1 Kbits/seconde du canal SMS-CB pour GSM permet facilement l'envoi de la mise à jour toutes les heures d'un volume moindre de données, par exemple, de la première page d'accueil du portail WAP.

C'est pourquoi, dans un autre mode de réalisation du système selon l'invention, le centre de diffusion unidirectionnelle gère une répétition de diffusion des données prédéterminées identiques selon au moins une règle de répétition prédéfinie, par exemple, une fois par heure.

Cette approche facilite avantageusement la diffusion des mêmes données sur, par exemple, toutes les cellules du réseau radiotéléphonique sans se préoccuper d'identifier le terminal mobile (T) donné. Dans un autre exemple, il est possible de limiter l'envoi uniquement aux terminaux présents dans une cellule (14) donnée ou encore aux terminaux dont l'identifiant (par exemple, le numéro de téléphone mobile attribué à l'abonné par le gestionnaire du réseau radiotéléphonique) comprend un nombre prédéterminé de chiffres etc. Bien entendu, la ou les règles de répétition de l'envoi évoquées ci-dessus peuvent également prendre en compte un ou plusieurs de ces paramètres et/ou le résultat d'une fonction utilisant ces paramètres. Ces règles sont gérées par le centre CBC qui comporte les moyens permettant à l'opérateur de gérer ces règles.

Reprenant l'exemple évoqué ci-dessus du réseau de radiotéléphonie UMTS, le centre CBC est capable de dialoguer avec le contrôleur de réseau radio (RNC) à l'aide des moyens logiciels et matériels mettant en oeuvre un protocole standardisé, par exemple, le protocole « SABP » (en anglais Service Area Broadcast Protocol). De même, le contrôleur de réseau radio (RNC) et le terminal mobile (T) disposent chacun des moyens logiciels et matériels mettant en oeuvre au moins une couche de contrôle spécifique au centre CBC, par exemple, la couche « BMC » (en anglais Broadcast Multicast Control). Ces moyens permettent ainsi au centre CBC ou au serveur interactif (F) de gérer selon au moins une règle de diffusion prédéfinie, par exemple, la programmation de diffusion des données prédéterminées.

Un autre exemple porte sur les données prédéterminées qui sont mises à jour par le serveur interactif (F), par exemple, de manière périodique (pour remplacer, par exemple, une ancienne version du contenu multimédia par sa nouvelle version). Les moyens évoqués ci-dessus (protocole SABP, couche BMC) permettent au centre CBC de diffuser ces données prédéterminées mises à jour, par exemple, à l'intervalle de temps prédéfini depuis la dernière mise à jour, par exemple aussitôt après la dernière mise à jour des données prédéterminées par le serveur interactif (F), et/ou depuis la dernière diffusion par le centre CBC de ces données prédéterminées mises à jour.

Une autre illustration des fonctions opérées par le centre CBC (et, supportées par la couche (BMC)) porte sur la manière spécifique du transport des messages. Par exemple, le centre CBC peut diffuser un message de programmation spécifique indiquant aux terminaux mobiles (T) ce que le serveur interactif (F) va diffuser par la suite. Il peut s'agir, par exemple, des paramètres déjà évoqués ci-dessus tels que le résumé du contenu, la version du contenu, l'heure de diffusion, le délai depuis la dernière mise à jour d'une page WAP prédéterminée, cette page WAP étant gérée et/ou hébergée par le serveur interactif (F), etc.

Selon un autre mode de réalisation de l'invention choisi, le message de programmation peut être généré soit par le centre CBC, soit par le serveur interactif (F) (par exemple, immédiatement après la mise à jour de la page WAP prédéterminée). Dans ce dernier cas, le message de programmation transite par le centre CBC mais n'est pas modifié par lui. De même, ce message de programmation avec l'état des caractéristiques d'identification des données prédéterminées (par exemple, la première page d'accueil du portail WAP) peut être associé ou non à chaque émission de données prédéterminées. En d'autres termes, le centre CBC peut, par exemple, diffuser d'abord le message de programmation et seulement ensuite un autre message avec les données prédéterminées. Dans une autre variante de l'invention, le message de programmation et le message avec les données prédéterminées sont confondus.

Pour mieux comprendre le fonctionnement du système selon l'invention, et notamment du mécanisme de déclenchement du transfert de données du serveur interactif (F) au terminal mobile (T) sur l'initiative du serveur interactif (F), citons ici, à titre d'exemple, une configuration du système selon l'invention compatible avec le mode de fonctionnement dit « poussée WAP » (en anglais WAP push) dont l'architecture est illustrée schématiquement sur la figure 2. On y distingue le serveur interactif (F) jouant le rôle d'un serveur initiateur d'envoi (F=PI) (en anglais Push Initiator) et le terminal mobile (T) de l'abonné. De même, le réseau de radiotéléphonie comprend un serveur d'entrée, par exemple, un serveur d'entrée dit « PPG » (en anglais Push Proxy Gateway). Il est installé en aval du serveur interactif (F=PI) et en amont du centre de diffusion CBC par rapport au sens de transmission des données prédéterminées du serveur interactif (F=PI) vers le terminal mobile (T).

L'échange entre le serveur interactif (F=PI) et le serveur d'entrée PPG s'opère à l'aide de moyens matériels et logiciels mettant en oeuvre, par exemple, un protocole spécifique « PAP » (en anglais Push Access Protocol). L'échange entre le serveur d'entrée PPG et le terminal mobile (T) s'opère à l'aide, de moyens matériels et logiciels mettant en oeuvre par exemple, un autre protocole spécifique « POAP » (en anglais Push Over the Air Protocol). Pour cela une ouverture d'une session de connexion unidirectionnelle au serveur d'entrée du terminal mobile (T), via le canal unidirectionnel commun à tous les terminaux mobiles, par exemple, SMS-CB, est nécessaire entre le terminal mobile (T) et le serveur d'entrée PPG. Dans un mode de réalisation du système selon l'invention, les moyens d'identification du terminal mobile (T) maintiennent la session de connexion unidirectionnelle ouverte en permanence. Cette possibilité d'avoir la session de connexion unidirectionnelle ouverte en permanence mais seulement via le seul canal SMS-CB permet avantageusement au terminal mobile (T)
- de recevoir et/ou enregistrer les données prédéterminées provenant du serveur interactif lorsque l'appareil est, par exemple, exclusivement en mode veille et/ou exclusivement en mode « en attente » (en anglais « idle mode » ou « always-on mode »),
- de ne pas recevoir et/ou ne pas enregistrer les données prédéterminées provenant du serveur interactif lorsque l'appareil est, par exemple, en mode d'émission/réception de la voix, par exemple, lors de la conversation téléphonique de l'abonné.

En d'autres termes, la possibilité d'avoir la session de connexion unidirectionnelle ouverte en permanence mais seulement via le seul canal SMS-CB permet la réception et/ou l'enregistrement des données prédéterminées en fonction des états différents de fonctionnement du terminal mobile (T).

Le serveur d'entrée PPG résout les questions d'adressage pour le canal SMS-CB.

De même, les données prédéterminées diffusées par le centre CBC sont formées par une pluralité de messages du volume prédéfini obtenus lors de la segmentation préalable des données prédéterminées du serveur interactif (F) par le serveur d'entrée PPG selon au moins une règle de segmentation prédéfinie. Pour cela le serveur d'entrée PPG peut utiliser les moyens logiciels et matériels mettant en oeuvre, par exemple, le protocole WDP qui est adapté pour segmenter les pages WAP en messages courts de type SMS (en anglais Short Message Service). Quant au canal SMS-CB, il sert à transporter ces messages SMS. La taille d'un message SMS est limitée à un nombre d'octets prédéterminé, par exemple, à 1230 octets maximums. Ainsi, les pages WAP provenant du serveur interactif (F) sont segmentées par le serveur d'entrée PPG en nombre de messages SMS correspondant avant leur transfert, par exemple, par paquets, via le canal SMS-CB, au terminal mobile (T).

Le fonctionnement général du système selon l'invention peut être illustré par un exemple très simplifié ci-après. D'abord, le serveur interactif (F=PI) détecte une page WAP prédéterminée d'accueil du portail WAP mise à jour, par exemple, par le fournisseur d'accès Internet de l'abonné. Ensuite, le serveur interactif (F=PI) sollicite le serveur d'entrée PPG pour diffuser (et/ou mettre à jour) à l'aide du centre CBC, via le canal SMS-CB de la station de base (B), la page WAP concernée, par exemple, dans tous les terminaux mobiles (T) du réseau de radiotéléphonie UMTS.

Le serveur d'entrée (PPG) communique alors avec le centre CBC en lui transmettant un premier ordre horodaté de diffusion (M1), en lui précisant, par exemple, le numéro du premier ordre, le numéro de la version du contenu multimédia, le numéro de cellule (14) de diffusion, le nombre de pages etc. Le centre CBC transmet ce premier ordre de diffusion (M1) au contrôleur de réseau radio RNC. Ce dernier le traite, puis génère un second ordre horodaté de diffusion (M2) à destination, par exemple, de toutes les cellules concernées, qui reprend une partie du premier ordre de diffusion, par exemple, le numéro du premier ordre, le numéro de la version du contenu multimédia, le nombre de pages etc., mais sans retenir, par exemple, le numéro de cellule. Ce deuxième ordre (M) est ensuite transmis aux stations de base (B) qui diffusent via leur canal SMS-CB les données prédéterminées, par exemple, à tous les terminaux mobiles (T).

Les terminaux mobiles (T) sont préprogrammés pour écouter les messages, c'est-à-dire, les recevoir et/ou les enregistrer à l'aide de moyens de mémorisation de masse de chaque terminal mobile (T). Des messages, par exemple, de type SMS, formant la page WAP, sont rassemblés en une pluralité de messages qui est transmise à une application spécifique, par exemple, d'architecture modulaire, disposée dans chacun des terminaux mobiles (T) du réseau de radiotéléphonie UMTS. Pour chaque terminal, cette application spécifique exécute, par exemple, les tâches principales suivantes :
- enregistre la page WAP à l'aide des moyens de mémorisation de masse du terminal mobile (T),
- gère la touche d'accès direct (13) au portail WAP pour décider ou non (par exemple, selon la date de la dernière mise à jour de la page enregistrée) d'un accès à la mémoire ou d'une recherche (navigation) dans le contenu distant,
- si l'affichage de la page enregistrée est décidé, une procédure d'attachement de données (par exemple, au noeud de traitement SGSN) suivie de l'ouverture d'une négociation de la qualité de service à l'aide, par exemple, du protocole « PDP » (en anglais Packet Data Protocol) et de l'établissement d'une liaison entre le coeur du réseau (12) et sa partie radio (B), est initiée en vue d'établir une connexion bidirectionnelle au serveur interactif à l'aide, par exemple, du noeud de traitement SGSN,
- lors de la navigation dans la première page d'accueil mémorisée par les moyens de mémorisation de masse du terminal mobile, l'accès à une page directement dépendante, par exemple, une seconde page d'accueil, est de la même façon recherché d'abord dans le mémoire du terminal mobile (T) et en cas d'échec par un message envoyé au serveur via la connexion bidirectionelle.

Comme déjà mentionné ci-dessus, l'accès à ces pages préenregistrées dans la mémoire du terminal mobile est impossible autrement que via l'interface homme-machine (IHM) normale de connexion au portail WAP afin de respecter, le cas échéant, les lois sur la diffusion de messages non sollicités.

En termes d'avantages, le système selon l'invention donne l'impression à l'abonné d'un accès quasi instantané au moins à la première page d'accueil du portail WAP, voire aux deux niveaux de l'arborescence des pages WAP. Cela améliore incontestablement les performances au lancement d'une navigation WAP qui permet alors à l'abonné d'avoir un accès quasi instantané au moins à une partie du contenu recherché, par exemple, aux numéros des services d'urgence (sans être obligé d'attendre cette information durant les dizaines de secondes que nécessite la connexion WAP, comme précisé précédemment).

Un autre avantage procuré par le système selon l'invention, est la réduction radicale du nombre d'inscrits aux licences d'accès auprès du noeud de traitement SGSN. En effet il n'est plus nécessaire de pré-inscrire les abonnés afin de gagner, par exemple, 5 secondes lors de l'ouverture de session WAP.

Enfin, le système selon invention s'appuie sur des protocoles standard en limitant ainsi les développements spécifiques, ce qui augmente in fine la fiabilité du système selon l'invention en la rendant plus stable face aux bogues informatiques.

## Revendications

1. Système pour accélérer l'accès à des données prédéterminées constituant soit un contenu multimédia, soit l'accès à un service privilégié, comprenant au moins un terminal de communication radiotéléphonique cellulaire sans fil, dit terminai mobile (T), comportant au moins un objet essentiellement électronique à microcircuit et mémoire (0) et au moins une interface interactive (1) comprenant au moins un écran, au moins un clavier, au moins une touche du clavier et/ou au moins une zone tactile de l'écran du terminal, dite touche d'accès direct (13), permettant l'accès direct au contenu multimédia et/ou au service privilégié, le terminal mobile (T) pouvant communiquer dans un réseau de radiotéléphonie identifiable par des moyens du réseau, avec au moins un serveur interactif fournissant le contenu multimédia et/ou le service privilégié, dit serveur interactif (F), la transmission et la réception des données entre le terminal mobile (T) et le serveur interactif (F) s'opérant de manière bidirectionnelle du terminal mobile (T) vers le serveur interactif (F) et vice versa à l'aide d'au moins un noeud de traitement (SGSN), **caractérisé en ce que** le réseau de radiotéléphonie comprend un centre de diffusion unidirectionnelle (CBC) de données prédéterminées du serveur interactif (F) vers le terminal mobile (T) ou une pluralité de terminaux mobiles (T), via un canal unidirectionnel commun (SMS-CB) à tous les terminaux mobiles (T), **en ce que** les données prédéterminées transmises par le centre de diffusion unidirectionnelle (CBC) comportent au moins une caractéristique d'identification identifiable par des moyens du terminal mobile (T), et **en ce que** le terminal mobile (T) comporte :
- des moyens d'identification pour identifier les données prédéterminées transmises par le centre de diffusion unidirectionnelle (CBC) via le canal unidirectionnel commun (SMS-CB) à tous les terminaux mobiles (T),
- des moyens de mémorisation de masse pour enregistrer les données prédéterminées identifiées par les moyens d'identification,
- des moyens d'autorisation pour lire des informations représentatives de la caractéristique d'identification des données prédéterminées enregistrées par les moyens de mémorisation de masse et pour autoriser ou non en fonction de ces informations l'accès de la touche d'accès directe (13) à au moins une partie de ces données prédéterminées.

2. Système selon la revendication 1, **caractérisé en ce que** la programmation de diffusion des données prédéterminées est gérée selon au moins une règle de diffusion prédéfinie par le centre de diffusion unidirectionnelle (CBC) ou par le serveur interactif (F).

3. Système selon la revendication 2, **caractérisé en ce que** les données prédéterminées sont mises à jour par le serveur interactif (F) de manière périodique et **en ce que** le centre de diffusion unidirectionnelle (CBC) diffuse ces données prédéterminées mises à jour à l'intervalle de temps prédéfini depuis la dernière mise à jour.

4. Système selon l'une des revendications 1 à 3, **caractérisé en ce que** le centre de diffusion unidirectionnelle (CBC) gère une répétition de diffusion des données prédéterminées identiques selon au moins une règle de répétition prédéfinie.

5. Système selon l'une des revendications 1 à 4, **caractérisé en ce que** les données prédéterminées transmises par le centre de diffusion unidirectionnelle (CBC), via le canal unidirectionnel commun (SMS-CB) à tous les terminaux mobiles (T), sont identifiables par les moyens d'identification du terminal mobile (T) à l'aide d'une ou plusieurs caractéristiques d'identification choisies parmi les paramètres suivants et/ou le résultat d'une fonction utilisant ces paramètres : (a) instant horodaté de la diffusion des données prédéterminées par le centre de diffusion unidirectionnelle (CBC) ; (b) contenu des données prédéterminées transmises par le centre de diffusion unidirectionnelle (CBC) ; (c) version du contenu des données prédéterminées transmises par le centre de diffusion unidirectionnelle (CBC) ; (d) numéro de cellule (14) du réseau de radiotéléphonie ; (e) identifiant du terminal mobile (T) dans le réseau de radiotéléphonie.

6. Système selon l'une des revendications 1 à 5, **caractérisé en ce qu'**au moins une partie des caractéristiques d'identification des données prédéterminées est émise, de manière séparée via le canal unidirectionnel commun (SMS-CB) à tous les terminaux mobiles (T), par le centre de diffusion unidirectionnelle (CBC) préalablement à la diffusion, via ce même canal unidirectionnel (SMS-CB), des données prédéterminées.

7. Système selon l'une des revendications 1 à 6, **caractérisé en ce que** le réseau de radiotéléphonie comprend un serveur d'entrée (PPG) installé en aval du serveur interactif (F) et en amont du centre de diffusion unidirectionnelle (CBC) par rapport au sens de transmission des données prédéterminées du serveur interactif (F) vers le terminal mobile (T), et **en ce que** les données prédéterminées diffusées par le centre de diffusion unidirectionnelle (CBC) sont formées par une pluralité de messages du volume prédéfini obtenus lors de la segmentation préalable des données prédéterminées du serveur interactif (F) par le serveur d'entrée (PPG) selon au moins une règle de segmentation prédéfinie.

8. Système selon la revendication 7, **caractérisé en ce que** les moyens d'identification du terminal mobile (T) maintiennent une session de connexion unidirectionnelle du serveur d'entrée (PPG) au terminal mobile (T), via le canal unidirectionnel commun (SMS-CB) à tous les terminaux mobiles (T), ouverte en permanence.

9. Système selon l'une des revendications 1 à 8, **caractérisé en ce que** le terminal mobile (T) comporte des moyens de gestion pour envoyer une requête au réseau de radiotéléphonie en vue d'établir une nouvelle connexion bidirectionnelle du terminal mobile (T) au serveur interactif (F) à l'aide du noeud de traitement (SGSN), cette requête étant envoyée simultanément avec l'affichage de données prédéterminées enregistrées par les moyens de mémorisation de masse du terminal mobile (T) sur l'écran du terminal mobile (T) à l'aide de la touche d'accès direct (13) du terminal mobile (T).

10. Système selon l'une des revendications 1 à 9, **caractérisé en ce que** le réseau de radiotéléphonie et le terminal mobile sont compatibles avec la technologie GSM et/ou la technologie UMTS.

11. Système selon l'une des revendications 1 à 10, **caractérisé en ce que** les données prédéterminées comprennent au moins une page d'accueil à un portail multimédia de type WAP géré par le serveur interactif (F).

12. Procédé pour accélérer l'accès à des données prédéterminées constituant soit un contenu multimédia, soit l'accès à un service privilégié, mis en oeuvre par le système selon la revendication 1,
**caractérisé en ce qu'**il comporte
- une étape de communication du serveur interactif (F) avec le réseau de radiotéléphonie par l'intermédiaire d'au moins un centre de diffusion unidirectionnelle (CBC) pour diffuser, via un canal unidirectionnel commun (SMS-CB) à tous les terminaux mobiles (T), les données prédéterminées du serveur interactif (F) vers le terminal mobile (T) ou une pluralité de terminaux mobiles (T), ces données prédéterminées comportant au moins une caractéristique d'identification identifiable par des moyens du terminal mobile (T),
- une étape d'identification par des moyens d'identification du terminal mobile (T) des données prédéterminées transmises par le centre de diffusion unidirectionnelle (CBC), via le canal unidirectionnel commun (SMS-CB) à tous les terminaux mobiles (T),
- une étape d'enregistrement par des moyens de mémorisation de masse du terminal mobile (T) des données prédéterminées identifiées par les moyens d'identification du terminal mobile (T),
- une étape d'autorisation par des moyens d'autorisation du terminal mobile (T) pour lire des informations représentatives de la caractéristique d'identification des données prédéterminées enregistrées par les moyens de mémorisation de masse du terminal mobile (T) et pour, en fonction de ces informations, autoriser ou non par la touche d'accès direct (13) l'utilisation d'au moins une partie de ces données prédéterminées.

13. Procédé selon la revendication 12, **caractérisé en ce qu'**il comprend une étape de programmation de la diffusion des données prédéterminées gérée par le centre de diffusion unidirectionnelle (CBC) ou par le serveur interactif (F) selon au moins une règle de diffusion prédéfinie.

14. Procédé selon la revendication 13, **caractérisé en ce qu'**il comprend
- une étape de mise à jour périodique des données prédéterminées par le serveur interactif (F) et
- une étape de diffusion de ces données prédéterminées mises à jour, par le centre de diffusion unidirectionnelle (CBC) à l'intervalle de temps prédéfini depuis la dernière diffusion.

15. Procédé selon l'une des revendications 12 à 14, **caractérisé en ce qu'**il comprend une étape de répétition de la diffusion par le centre de diffusion unidirectionnelle (CBC) des données prédéterminées identiques selon au moins une règle de répétition prédéfinie.

16. Procédé selon l'une des revendications 12 à 15, **caractérisé en ce que** l'étape de diffusion des données prédéterminées par le centre de diffusion unidirectionnelle (CBC) est précédée par une étape de diffusion séparée préalable par le centre de diffusion unidirectionnelle (CBC), via le canal unidirectionnel commun (SMS-CB) à tous les terminaux mobiles (T), d'au moins une partie des caractéristiques d'identification des données prédéterminées.

17. Procédé selon l'une des revendications 12 à 16, **caractérisé en ce que** l'étape de diffusion des données prédéterminées par le centre de diffusion unidirectionnelle (CBC), via le canal unidirectionnel commun (SMS-CB) à tous les terminaux mobiles (T), est précédée par une étape de segmentation préalable des données prédéterminées en une pluralité de messages de volume prédéfini par un serveur d'entrée (PPG) installé en aval du serveur interactif (F) et en amont du centre de diffusion unidirectionnelle (CBC) par rapport au sens de transmission des données prédéterminées du serveur interactif (F) vers le terminal mobile (T), cette segmentation étant opérée par le serveur d'entrée (PPG) selon au moins une règle de segmentation prédéfinie.

18. Procédé selon la revendication 17, **caractérisé en ce qu'**il comprend une étape d'ouverture permanente par les moyens d'identification du terminal mobile (T) d'une connexion unidirectionnelle au serveur d'entrée (PPG) du terminal mobile (T), via le canal unidirectionnel commun (SMS-CB) à tous les terminaux mobiles (T).

19. Procédé selon l'une des revendications 12 à 18, **caractérisé en ce qu'**il comprend une étape d'envoi d'une requête par des moyens de gestion du terminal mobile (T) au réseau de radiotéléphonie en vue d'établir une nouvelle connexion bidirectionnelle du terminal mobile (T) au serveur interactif (F) à l'aide du noeud de traitement (SGSN) du réseau de radiotéléphonie, cette étape d'envoi de la requête s'opérant simultanément avec une étape d'affichage des données prédéterminées enregistrées par les moyens de mémorisation de masse du terminal mobile (T) sur l'écran du terminal mobile (T), ces deux étapes étant déclenchées par l'actionnement de la touche d'accès direct (13) du terminal mobile (T).

20. Procédé selon l'une des revendications 12 à 19, **caractérisé en ce que** le réseau de radiotéléphonie à travers lequel les données prédéterminées du serveur interactif (F) sont transmises et le terminal mobile (T) destinataire de ces données, sont compatibles avec la technologie GSM et/ou la technologie UMTS.

21. Procédé selon l'une des revendications 12 à 20, **caractérisé en ce que** les données prédéterminées comprennent au moins une page d'accueil à un portail multimédia de type WAP géré par le serveur interactif (F).

## Claims

1. A system for accelerating access to a predetermined data either forming a multimedia content or access to a preferential service, comprising at least one wireless cellular radiotelephone communications terminal, so-called mobile terminal (T), including at least one essentially electronic object with a microcircuit and memory (0), and at least one interactive interface (1) comprising at least one screen, at least one keyboard, at least one keyboard key and/or at least one tactile area of the screen of the terminal, so-called direct access key (13), allowing direct access to the multimedia content and/or to the preferential service, the mobile terminal (T) being able to communicate in an identifiable radiotelephone network by means of the network with at least one interactive server providing the multimedia content and/or to the preferential service, so-called interactive server (F), the transmission and reception of data between the mobile terminal (T) and the interactive server (F) being performed bidirectionally from the mobile terminal (T) to the interactive server (F), and vice versa by means of at least one processing node (SGSN), **characterized in that** the radiotelephone network comprises a centre for unidirectional broadcasting (CBC) of predetermined data from the interactive server (F) to the mobile terminal (T) or a plurality of mobile terminals (T), via a unidirectional channel (SMS-CB) common to all the mobile terminals (T), **in that** the predetermined data transmitted by the unidirectional broadcasting centre (CBC) include at least one identification characteristic which may be identified by the means of the mobile terminal (T), and **in that** the mobile terminal (T) includes:
- identification means for identifying the predetermined data transmitted by the unidirectional broadcasting centre (CBC) via the unidirectional channel (SMS-CB) common to all the mobile terminals (T),
- mass storage means for recording the predetermined data identified by the identification means,
- authorization means for reading the representative information of the identification characteristic of the predetermined data recorded by the mass storage means and for either authorising or not, depending on this information, access to the direct access key (13) to at least one portion of these predetermined data.

2. The system according to claim 1, **characterized in that** the programming for broadcasting the predetermined data is managed according to at least one broadcasting rule predefined by the unidirectional broadcasting centre (CBC), or by the interactive server (F).

3. The system according to claim 2, **characterized in that** the predetermined data are updated by the interactive server (F) periodically and **in that** the unidirectional broadcasting centre (CBC) broadcasts these updated predetermined data at the time interval predefined since the last update.

4. The system according to one of claims 1 to 3, **characterized in that** the unidirectional broadcasting centre (CBC) manages a repetition of broadcasting the identical predetermined data according to at least one predefined repetition rule.

5. The system according to one of claims 1 to 4, **characterized in that** the predetermined data transmitted by the unidirectional broadcasting centre (CBC), via the unidirectional channel (SMS-CB) common to all the mobile terminals (T) may be identified by the identification means of the mobile terminal (T) with one or several identification characteristics selected from the following parameters and/or the result of a function using these parameters: (a) time-stamped instant for broadcasting the dates predetermined by the unidirectional broadcasting centre (CBC); (b) content of the predetermined data transmitted by the unidirectional broadcasting centre (abc); (c) version of the content of the predetermined data transmitted by the unidirectional broadcasting centre (CBC); (d) cell number (14) of the radiotelephone network; (e) identifier of the mobile terminal (T) in the radiotelephone network.

6. The system according to one of claims 1 to 5, **characterized in that** at least one portion of the identification characteristics of the predetermined data is transmitted, separately via the unidirectional channel (SMS-CB) common to all the mobile terminals (T), by the unidirectional broadcasting centre (CBC) prior to the broadcasting, via this same unidirectional channel (SMS-CB), of the predetermined data.

7. The system according to one of claims 1 to 6, **characterized in that** the radiotelephone network comprises an entry server (PPG) set up downstream from the interactive server (F) and upstream from the unidirectional broadcasting centre (CBC) with respect to the direction of transmission of the predetermined data from the interactive server (F) to the mobile terminal (T), and **in that** the predetermined data broadcast by the unidirectional broadcasting centre (CBC) are formed by a plurality of messages of the predefined volume, obtained during prior segmentation of the predetermined data of the interactive server (F) by the entry server (PPG) according to at least one predefined segmentation rule.

8. The system according to claim 7, **characterized in that** the means for identifying the mobile terminal (T) maintain a permanently open unidirectional connection session from the entry server (PPG) to the mobile terminal (T), via the unidirectional channel (SMS-CB) common to all the mobile terminals (T).

9. The system according to one of claims 1 to 8, **characterized in that** the mobile terminal (T) includes a management means for sending a request to the radiotelephone network, with view to establishing a new bidirectional connection from the mobile terminal (T) to the interactive server (F) by means of the processing node (SGSN), this request being simultaneously sent with the display of the predetermined data recorded by the mass storage means of the mobile terminal (T) on the screen of the mobile terminal (T) by means of the direct access key (13) of the mobile terminal (T).

10. The system according to one of claims 1 to 9, **characterized in that** the radiotelephone network and the mobile terminal are compatible with GSM technology and/or UMTS technology.

11. The system according to one of claims 1 to 10, **characterized in that** the predetermined data comprise at least one homepage of a multimedia portal of the WAP type managed by the interactive server (F).

12. A method for accelerating access to predetermined data either forming a multimedia content or access to a preferential service, applied by the system according to claim 1,
**characterized in that** it includes
- a step for communication of the interactive server (F) with the radiotelephone network via at least one unidirectional broadcasting centre (CBC) for broadcasting, via a unidirectional channel (SMS-CB) common to all the mobile terminals (T), the predetermined data from the interactive server (F) to the mobile terminal (T) or a plurality of mobile terminals (T), these predetermined data including at least one identification characteristic which may be identified by means of the mobile terminal (T),
- a step for identifying by identification means of the mobile terminal (T) the predetermined data transmitted by the unidirectional broadcasting centre (CBC), via the unidirectional channel (SMS-CB) common to all the mobile terminals (T),
- a step for recording by mass storage means of the mobile terminal (T) the predetermined data identified by the identification means of the mobile terminals (T),
- an authorization step by the authorization means of the mobile terminal (T) in order to read the information representative of the identification characteristics of the predetermined data recorded by the mass storage means of the mobile terminal (T) and depending on this information to authorize or not by the direct access key (13) the use of at least one portion of these predetermined data.

13. The method according to claim 12, **characterized in that** it comprises a step for programming the broadcasting of the predetermined data, managed by the unidirectional broadcasting centre (CBC), or by the interactive server (F) according to at least one predefined broadcasting rule.

14. The method according to claim 13, **characterized in that** it comprises
- a step for periodically updating the predetermined data by the interactive server (F) and
- a step for broadcasting these predetermined data updated by the unidirectional broadcasting centre (CBC) at the predefined time interval since the last broadcast.

15. The method according to one of claims 12 to 14, **characterized in that** it comprises a step for repeating the broadcasting by the unidirectional broadcasting centre (CBC) of the identical predetermined data according to at least one predefined repetition rule.

16. The method according to one of claims 12 to 15, **characterized in that** the step for broadcasting the predetermined data by the unidirectional broadcasting centre (CBC), is preceded with a prior separate step for broadcasting by the unidirectional broadcasting centre (CBC), via the unidirectional channel (SMS-CB) common to all the mobile terminals (T), at least one portion of the identification characteristics of the predetermined data.

17. The method according to one of claims 12 to 16, **characterized in that** the step for broadcasting the predetermined data by the unidirectional broadcasting centre (CBC), via the unidirectional channel (SMS-CB) common to all the mobile terminal (T), is preceded with a step for prior segmentation of the predetermined data into a plurality of messages with a volume predefined by an entry server (PPG) set up downstream from the interactive server (F) and upstream from the unidirectional broadcasting centre (ABC) with respect to the direction of transmission of the predetermined data from the interactive server (F) to the mobile terminal (T), this segmentation being performed by the entry server (PPG) according to at least one predefined segmentation rule.

18. The method according to claim 17, **characterized in that** it comprises a step for permanently opening by the identification means of the mobile terminal (T) a unidirectional connection to the entry server (PPG) from the mobile terminal (T), via the unidirectional channel (SMS-CB) common to all the mobile terminals (T).

19. The method according to one of claims 12 to 18, **characterized in that** it comprises a step for sending a request by management means of the mobile terminal (T) to the radiotelephone network, with view to establishing a new bidirectional connection from the mobiles terminal (T) to the interactive server (F) by means of the processing node (SGSN) of the radiotelephone network, this step for sending the request being simultaneously performed with a step for displaying the predetermined data recorded by the mass storage means of the mobile terminal (T) on the screen of the mobile terminal (T), both of these steps being triggered by the actuation of the direct access key (13) of the mobile terminal (T).

20. The method according to one of claims 12 to 19, **characterized in that** the radio telephone network through which the predetermined data of the interactive server (F), are transmitted and the mobile terminal (T) to which these data are addressed, are compatible with the GSM technology and/or UMTS technology.

21. The method according to one of claims 12 to 20, **characterized in that** the predetermined data comprise at least one homepage of a multimedia portail of the WAP type managed by the interactive server (F).

## Patentansprüche

1. System zur Beschleunigung des Zugriffs auf vorbestimmte Daten, die entweder einen Multimediainhalt darstellen, oder des Zugriffs auf einen privilegierten Service, das mindestens ein drahtloses zelluläres Funktelefonie-Kommunikationsendgerät, mobiles Endgerät (T) genannt, umfasst, das mindestens ein hauptsächlich elektronisches Objekt mit Mikroschaltung und Speicher (0) und mindestens eine interaktive Schnittstelle (1) aufweist, die mindestens einen Bildschirm, mindestens eine Tastatur, mindestens eine Tastaturtaste und/oder mindestens eine taktile Zone des Bildschirms des Endgerät, Direktzugriffstaste (13) genannt, umfasst, die den direkten Zugriff auf den Multimediainhalt und/oder auf den privilegierten Service gestattet, wobei das mobile Endgerät (T) in einem Funktelefonienetz, das durch Mittel des Netzes identifizierbar ist, mit mindestens einem interaktiven Server kommunizieren kann, der den Multimediainhalt und/oder den privilegierten Service bereitstellt, interaktiver Server (F) genannt, wobei die Übertragung und der Empfang der Daten zwischen dem mobilen Endgerät (T) und dem interaktiven Server (F) bidirektional vom mobilen Endgerät (T) zum interaktiven Server (F) und umgekehrt mit Hilfe mindestens eines Verarbeitungsknoten (SGSN) erfolgt, **dadurch gekennzeichnet, dass** das Funktelefonienetz ein unidirektionales Sendezentrum (CBC) vorbestimmte Daten vom interaktiven Server (F) zum mobilen Endgerät (T) oder zu einer Mehrzahl mobiler Endgeräte (T) über einen gemeinsamen unidirektionalen Kanal (SMS-CB) aller mobile Endgeräte (T) umfasst, und dass die vom unidirektionalen Sendezentrum (CBC) übertragenen vorbestimmten Daten mindestens ein Identifizierungsmerkmal aufweisen, das von Mitteln des mobilen Endgeräts (T) identifizierbar ist, und dass das mobiles Endgerät (T) aufweist:
- Identifikationsmittel, um die vorbestimmten Daten, die vom unidirektionalen Sendezentrum (CBC) über den gemeinsamen unidirektionalen Kanal (SMS-CB) aller mobilen Endgeräte (T) übertragen werden, zu identifizieren,
- Massenspeichermittel, um die von den Identifikationsmitteln identifizierten vorbestimmte Daten aufzuzeichnen,
- Genehmigungsmittel, um die repräsentativen Informationen des Identifikationsmerkmals der von den Massenspeichermitteln aufgezeichneten vorbestimmten Daten zu lesen und um in Abhängigkeit dieser Informationen den Zugriff der Direktzugriffstaste (13) auf mindestens einen Teil dieser vorbestimmten Daten zu erlauben oder nicht.

2. System nach Anspruch 1, **dadurch gekennzeichnet, dass** die Sendeprogrammierung der vorbestimmten Daten gemäß mindestens einer vorbestimmten Senderegel vom unidirektionalen Sendezentrum (CBC) oder vom interaktiven Server (F) verwaltet wird.

3. System nach Anspruch 2, **dadurch gekennzeichnet, dass** die vorbestimmten Daten vom interaktiven Server (F) periodisch aktualisiert werden und dass das unidirektionale Sendezentrum (CBC) diese aktualisierten vorbestimmten Daten in einem vordefinierten Zeitintervall ab der letzten Aktualisierung sendet.

4. System nach einem der Ansprüche 1 bis 3, **dadurch gekennzeichnet, dass** das unidirektionales Sendezentrum (CBC) eine Sendewiederholung der identischen vorbestimmten Daten gemäß mindestens einer vordefinierten Wiederholungsregel verwaltet.

5. System nach einem der Ansprüche 1 bis 4, **dadurch gekennzeichnet, dass** die vorbestimmte Daten, die vom unidirektionalen Sendezentrum (CBC) über den gemeinsamen unidirektionalen Kanal (SMS-CB) aller mobilen Endgeräte (T) übertragen werden, von den Identifikationsmitteln des mobilen Endgeräts (T) mit Hilfe eines oder mehrerer Identifikationsmerkmale identifizierbar sind, die aus den folgenden Parametern und/oder dem Ergebnis einer Funktion, die diese Parameter verwendet, ausgewählt sind: (a) zeiterfasster Moment des Sendens der vorbestimmten Daten durch das unidirektionalen Sendezentrum (CBC); (b) Inhalt der vom unidirektionalen Sendezentrum (CBC) übertragenen vorbestimmten Daten; (c) Version des Inhalts der vom unidirektionalen Sendezentrum (CBC) übertragenen vorbestimmten Daten; (d) Zellennummer (14) des Funktelefonienetzes; (e) Kennwort des mobilen Endgeräts (T) im Funktelefonienetz.

6. System nach einem der Ansprüche 1 bis 5, **dadurch gekennzeichnet, dass** mindestens ein Teil der Identifikationsmerkmale der vorbestimmten Daten vom unidirektionalen Sendezentrum (CBC) vor der Sendung der vorbestimmten Daten über denselben unidirektionalen Kanal (SMS-CB) separat über den gemeinsamen unidirektionalen Kanal (SMS-CB) aller mobilen Endgeräte (T) gesendet wird.

7. System nach einem der Ansprüche 1 bis 6, **dadurch gekennzeichnet, dass** das Funktelefonienetz einen Eingangsserver (PPG) umfasst, der im Verhältnis zur Übertragungsrichtung der vorbestimmten Daten des interaktiven Servers (F) zum mobilen Endgerät (T) nach dem interaktiven Server (F) und vor dem unidirektionalen Sendezentrum (CBC) installiert ist, und dass die vorbestimmten Daten, die vom unidirektionalen Sendezentrum (CBC) gesendet werden, von einer Mehrzahl von Nachrichten des vordefinierten Volumens gebildet werden, die bei der vorherigen Segmentierung der vorbestimmten Daten des interaktiven Servers (F) durch den Eingangsserver (PPG) gemäß mindestens einer vorbestimmten Segmentierungsregel gewonnen wurden.

8. System nach Anspruch 7, **dadurch gekennzeichnet, dass** die Identifikationsmittel des mobilen Endgeräts (T) eine unidirektionale Verbindungssitzung des Eingangsservers (PPG) zum mobilen Endgerät (T) über den gemeinsamen unidirektionalen Kanal (SMS-CB) aller mobilen Endgeräte (T) permanent geöffnet halten.

9. System nach einem der Ansprüche 1 bis 8, **dadurch gekennzeichnet, dass** das mobile Endgerät (T) Verwaltungsmittel aufweist, um an das Funktelefonienetz eine Anfrage zwecks Herstellung einer neuen bidirektionalen Verbindung des mobilen Endgeräts (T) mit dem interaktiven Server (F) mit Hilfe des Verarbeitungsknotens (SGSN) zu schicken, wobei diese Anfrage gleichzeitig mit der Anzeige von vorbestimmten Daten, die von den Massenspeichermitteln des mobilen Endgeräts (T) gespeichert wurden, auf dem Bildschirm des mobilen Endgeräts (T) mit Hilfe der Direktzugriffstaste (13) des mobilen Endgeräts (T) geschickt wird.

10. System nach einem der Ansprüche 1 bis 9, **dadurch gekennzeichnet, dass** das Funktelefonienetz und das mobile Endgerät mit der GSM- und/oder der UMTS-Technologie kompatibel sind.

11. System nach einem der Ansprüche 1 bis 10, **dadurch gekennzeichnet, dass** die vorbestimmten Daten mindestens eine Startseite eines vom interaktiven Server (F) verwalteten Multimediaportals vom Typ WAP umfassen.

12. Verfahren zur Beschleunigung des Zugriffs auf vorbestimmte Daten, die entweder einen Multimediainhalt darstellen, oder des Zugriffs auf einen privilegierten Service, das von dem System nach Anspruch 1 ungesetzt wird,
**dadurch gekennzeichnet, dass** es umfasst:
- einen Kommunikationsschritt des interaktiven Servers (F) mit dem Funktelefonienetz über mindestens ein unidirektionales Sendezentrum (CBC), um über einen gemeinsamen unidirektionalen Kanal (SMS-CB) aller mobilen Endgeräte (T) die vorbestimmten Daten des interaktiven Servers (F) zum mobilen Endgerät (T) oder zu einer Mehrzahl mobiler Endgeräte (T) zu senden, wobei diese vorbestimmten Daten mindestens ein Identifikationsmerkmal aufweisen, das von Mitteln des mobilen Endgeräts (T) identifizierbar ist,
- einen Identifikationsschritt durch Identifikationsmittel des mobilen Endgeräts (T) der vorbestimmten Daten, die vom unidirektionalen Sendezentrum (CBC) über den gemeinsamen unidirektionalen Kanal (SMS-CB) aller mobilen Endgeräte (T) übertragen wurden,
- einen Speicherschritt durch Massenspeichermittel des mobilen Endgeräts (T) der vorbestimmten Daten, die von den Identifikationsmitteln des mobilen Endgerät (T) identifiziert wurden,
- einen Genehmigungsschritt durch Genehmigungsmittel des mobilen Endgeräts (T) zum Lesen der repräsentativen Informationen des Identifikationsmerkmals der vorbestimmten Daten, die von den Massenspeichermittel des mobilen Endgeräts (T) gespeichert wurden, und um in Abhängigkeit dieser Informationen die Verwendung durch die Direktzugriffstaste (13) mindestens eines Teils dieser vorbestimmten Daten zu genehmigen oder nicht.

13. Verfahren nach Anspruch 12, **dadurch gekennzeichnet, dass** es einen Schritt der Sendeprogrammierung der vorbestimmten Daten umfasst, der vom unidirektionalen Sendezentrum (CBC) oder vom interaktiven Server (F) gemäß mindestens einer vorbestimmten Senderegel verwaltet wird.

14. Verfahren nach Anspruch 13, **dadurch gekennzeichnet, dass** es umfasst:
- einen periodischen Aktualisierungsschritt der vorbestimmten Daten durch den interaktiven Server (F) und
- einen Sendeschritt dieser aktualisierten vorbestimmten Daten durch das unidirektionale Sendezentrum (CBC) in einem vordefinierten Zeitintervall ab der letzten Sendung.

15. Verfahren nach einem der Ansprüche 12 bis 14, **dadurch gekennzeichnet, dass** es einen Schritt der Sendewiederhofuncd der identischen vorbestimmten Daten durch das unidirektionale Sendezentrum (CBC) gemäß mindestens einer vordefinierten Wiederholungsregel umfasst.

16. Verfahren nach einem der Ansprüche 12 bis 15, **dadurch gekennzeichnet, dass** dem Sendeschritt der vorbestimmten Daten durch das unidirektionale Sendezentrum (CBC) ein vorheriger separater Sendeschritt des unidirektionalen Sendezentrums (CBC) mindestens eines Teils der Identifikationsmerismale der vorbestimmten Daten über den gemeinsamen unidirektionalen Kanal (SMS-CB) aller mobilen Endgeräte (T) vorangeht.

17. Verfahren nach einem der Ansprüche 12 bis 16, **dadurch gekennzeichnet, dass** dem Sendeschritt der vorbestimmten Daten durch das unidirektionale Sendezentrum (CBC) über den gemeinsamen unidirektionalen Kanal (SMS-CB) aller mobilen Endgeräte (T) ein Schritt der vorherigen Segmentierung der vorbestimmten Daten in eine Mehrzahl von Nachrichten mit einem vordefinierten Volumen durch einen Eingangsserver (PPG) vorangeht, der im Verhältnis zur Übertragungsrichtung der vorbestimmten Daten des interaktiven Servers (F) zum mobiles Endgerät (T) nach dem interaktiven Servier (F) und vor dem unidirektionales Sendezentrum (CBC) installiert ist, wobei diese Segmentierung vom Eingangsserver (PPG) gemäß mindestens einer vordefinierten Segmentierungsregel durchgeführt wird.

18. Verfahren nach Anspruch 17, **dadurch gekennzeichnet, dass** es einen Schritt des permanenten Öffnens einer unidirektionalen Verbindung mit dem Eingangsserver (PPG) des mobilen Endgeräts (T) durch die Identifikationsmittel des mobilen Endgeräts (T) über den gemeinsamen unidirektionalen Kanal (SMS-CB) aller mobilen Endgeräte (T) umfasst.

19. Verfahren nach einem der Ansprüche 12 bis 18, **dadurch gekennzeichnet, dass** es einen Schritt des Versands einer Anfrage durch Verwaltungsmittel des mobilen Endgeräts (T) an das Funktelefonienetz zwecks Herstellung einer neuen bidirektionalen Verbindung des mobilen Endgeräts (T) mit dem interaktiven Server (F) mit Hilfe des Verarbeitungsknotens (SGSN) des Funktelefonienetzes umfasst, wobei dieser Schritt des Versands der Anfrage gleichzeitig mit einem Schritt der Anzeige der von den Massenspeichermitteln des mobilen Endgeräts (T) gespeicherten vorbestimmten Daten auf dem Bildschirm des mobilen Endgeräts (T) erfolgt, wobei diese zwei Schritte durch Betäten der Direktzugriffstaste (13) des mobilen Endgeräts (T) ausgelöst werden.

20. Verfahren nach einem der Ansprüche 12 bis 19, **dadurch gekennzeichnet, dass** das Funktelefonienetz, mit dem die vorbestimmten Daten des interaktiven Servers (F) übertragen werden, und das mobile Endgerät (T), das Empfänger dieser Daten ist, mit der GSM- und/oder UMTS-Technologie kompatibel sind.

21. Verfahren nach einem der Ansprüche 12 bis 20, **dadurch gekennzeichnet, dass** die vorbestimmten Daten mindestens eine Startseite eines vom interaktiven Server (F) verwalteten Multimediaportals vom Typ WAP umfassen.
